# EUROPÄISCHE PATENTSCHRIFT

(11) **EP 2 778 588 B1**
(45) Veröffentlichungstag und Bekanntmachung des Hinweises auf die Patenterteilung: **12.12.2018**
(21) Anmeldenummer: 14000750.1
(22) Anmeldetag: 03.03.2014
(51) Int. Cl.: F27B 9/02, C04B 33/32, F27B 9/24, F27B 9/36

(54) **Ofen zum Brennen von keramischen Formlingen**
Oven for sintering ceramic articles
Four pour le frittage des articles céramiques

(30) Priorität: 13.03.2013 DE 102013004265
(43) Veröffentlichungstag der Anmeldung: 17.09.2014
(73) Patentinhaber: Keller HCW GmbH, 49479 Ibbenbüren-Laggenbeck (DE)
(72) Erfinder: Gausmann, Heiner, 49205 Hasbergen (DE); Heitman, Peter, 48612 Horstmar (DE); Hüsing, Rainer, 48480 Spelle (DE)
(74) Vertreter: Busse & Busse

(56) Entgegenhaltungen:
- WO-A1-01/71265
- DE-A1- 3 222 871
- DE-A1- 4 438 417

## Beschreibung

Die vorliegende Erfindung betrifft einen Ofen zum Brennen von keramischen Formlingen, insbesondere von Ziegeln, mit einer Mehrzahl von in parallel zueinander und entlang einer längsverlaufenden Ofenstrecke bewegbaren Zügen, die jeweils mehrere Ofenwagen umfassen, auf denen die Formlinge anzuordnen sind, wobei die Ofenstrecke eine Brennzone zur Erhitzung der Formlinge aufweist und wobei nebeneinander angeordnete Züge in entgegengesetzten Richtungen A und B bewegbar sind und der Ofen auf einer ersten Seite der Ofenstrecke zur Bestückung des Ofens mit in einer ersten Richtung A zu bewegenden Formlingen ausgebildet ist, und der Ofen auf einer der ersten Seite und bezüglich der Brennzone gegenüberliegenden zweiten Seite der Ofenstrecke zur Bestückung mit den in die entgegengesetzte, zweite Richtung B zu bewegenden Formlingen ausgebildet ist, die Ofenwagen jeweils unter Verzicht auf eine Richtungsumkehr durch die Brennzone hindurch bewegbar sind und die im Betrieb auf den Ofenwagen anzuordnenden Formlinge nebeneinander angeordneter Züge eine zwischen den Formlingen befindliche Längsgasse definieren.

Ein Gegenstand nach dem Oberbegriff des Anspruchs 1 ist aus der WO 01/71265 A1 bekannt. In der Decke der Brennzone angeordnete elektrische Heizelemente dienen der Erhitzung von auf Ofenwagen angeordneten Formlingen. Bei den insbesondere in der Ziegelherstellung verwendeten Stapeln von Formlingen ergibt sich eine nur ungleichmäßige Verteilung der eingebrachten Energie. Gleichzeitig begrenzt die Deckenhöhe mit den Heizelementen die Höhe der Stapel.

Aus der DE 44 38 417 ist ein Ofen zum Herstellen von grobkeramischen Produkten bekannt, bei dem durch besondere Einrichtungsgegenstände sichergestellt werden soll, dass sich eine gleichmäßig schöne Färbung erreichen lässt, was dadurch geschehen soll, dass die Basispakete bei der Reduktion auf ihrer ganzen Höhe angeflammt werden. Hierzu werden für die Reduktionszone Lanzenbrenner vorgesehen, die mittels einer Verschiebeeinheit in den Ofenraum hineinbewegbar sind. Dazu sind die Lanzenbrenner an einem gemeinsamen Träger gehalten, so dass sie in die Längsgassen zwischen benachbarten Zonen eintauchen können, aber jeweils nur auf eine Höhe, die in den jeweiligen Längsgassen gleich ist. Auch innerhalb einer Längsgasse sind die einzutauchenden Lanzenbrenner auf eine gleichbleibende Höhe einzustellen, so dass damit eine vergleichmäßigte Temperaturverteilung und somit eine optimiertere Energieverteilung nicht erreichbar ist.

Die hier gleichmäßig zu färbenden grobkeramischen Produkte sind im Übrigen auf einem gemeinsamen Wagen gestapelt und somit in einer Richtung durch den Ofen zu bewegen. Gegenläufige Züge sind bei diesem Ofen nicht darstellbar, so dass sich die hier vorgesehenen Lanzenbrenner mit dem höhenbeweglichen Träger nicht bei einem Ofen zum Brennen von keramischen Formlingen einsetzen lassen, wie er aus der WO07/71265 A1 bekannt ist.

Aus der DE 32 22 871 A1 ist eine Vorrichtung zum Brennen von grobkeramischen Produkten bekannt, bei der in einer Quergasse zwischen Produktpaketen Brenner angeordnet sind, wobei die Arbeitshöhe der Brenner in dem Brennschlitz einstellbar sein soll. Der Verfahrweg des Wagens, auf dem die Besatzpakete angeordnet sind, ist quer zu der jeweiligen Quergasse ausgerichtet, in die die Brenner eintauchen, so dass ein kontinuierlicher Betrieb mit dieser Vorrichtung, bei der sich die Formlingspakete während des Brennens durch den Ofen hindurchbewegen, nicht möglich ist. Somit lässt sich auch diese Brennvorrichtung nicht bei einem Ofen anwenden, bei dem sich in gegensinniger Richtung Züge von Kermaikprodukten kontinuierlich durch den Ofen hindurchbewegen, wie dies bei der Vorrichtung nach der WO01/71265 A1 der Fall ist.

Es ist Aufgabe der vorliegenden Erfindung, einen vorbezeichneten Ofen hinsichtlich der Energieverteilung und der Stapelhöhe zu optimieren.

Die vorstehende Aufgabe wird durch einen erfindungsgemäßen Gegenstand gemäß Anspruch 1 gelöst. Vorteilhafte Ausgestaltungen der Erfindung sind den auf diesen Anspruch rückbezogenen Unteransprüchen sowie der nachfolgenden Beschreibung zu entnehmen.

Die eingangs gestellte Aufgabe wird durch einen Ofen gelöst, der sich dadurch auszeichnet, dass in der Brennzone eine Mehrzahl von Brenn- oder Heizelementen dergestalt in unterschiedlicher Höhe in wenigstens einer Längsgasse angeordnet ist, dass eine Energiezufuhr in die Brennzone unterschiedlich hoch erfolgt. Hierdurch ergibt sich eine optimiertere Energieverteilung als im Stand der Technik. Beispielsweise kann die Verteilung gleichmäßiger oder gewollt ungleichmäßig mit mehr als einem Maximun in der Senkrechten betrachtet ausgebildet werden. Die verwendete Heizenergie wird direkter zu den Formlingen gebracht, was zu einer erhöhten Effizienz in der Brennzone und mithin zu einem verringerten Energieeinsatz führt. Die Erhitzung der Ziegel oder dergleichen Formlinge kann unmittelbar und gleichmäßig über deren Aufbauhöhe im Besatz verteilt erfolgen. Durch die Verwendung von nur in und/oder oberhalb der Längsgassen angeordneten Heizelementen können die Formlinge in der Brennzone höher gestapelt und bis auf einen Mindestabstand dicht an die Brennzone nach oben begrenzende Decke herangeführt werden.

Unterschiedlich hoch ist die Anordnung der Heizelemente dann, wenn die durch das Brenn- oder Heizelement in die Längsgasse eingeführte Wärmeenergie durch unterschiedlich hoch bezüglich einer beliebigen horizontal ausgerichteten Bezugsebene angeordnete Zuführmittel wie beispielsweise Austrittsöffnungen oder -düsen der Brenn- oder Heizelemente zugeführt wird oder bezüglich derselben Ebene bei auf einer Höhe angeordneten Zuführmitteln die in den Längsgassen befindlichen Maxima der von den Brenn- oder Heizelementen bewirkten Temperaturen unterschiedlich hoch liegen.

Die Brenn- oder Heizelemente des insbesondere mehr als zwei nebeneinander befindliche Züge aufweisenden Ofens sind in benachbarten Längsgassen in der Höhe versetzt zueinander angeordnet. Durch den höhenmäßigen, aber auch durch einen in Bewegungsrichtung (Richtungen A, B) betrachteten Versatz der Heizelemente kann eine hervorragend auf die zu brennenden Formlinge abstellbares Muster der Energiezufuhr und -verteilung erreicht werden. Hierdurch wird der Brennvorgang optimiert. Mittels zugehörigen Steuermittel kann das Muster der Energiezufuhr und -verteilung auch zeitlich variiert werden.
gehörigen Steuermittel kann das Muster der Energiezufuhr und -verteilung auch zeitlich variiert werden.

Vorteilhafterweise ist bei einer Anzahl von n > 2 Zügen und einer Anzahl (n-1) Längsgassen zumindest in jeder zweiten Längsgasse, bevorzugt in jeder Längsgasse, wenigstens ein Brenn- oder Heizelement angeordnet. Insbesondere sind jedoch in jeder Längsgasse eine Mehrzahl von in Längsrichtung der Ofenstrecke betrachtet hintereinander angeordneter Brenn- oder Heizelemente vorhanden. Die eingebrachte Energie kann somit optimal eingesetzt werden, woraus sich Energieeinsparungen ergeben. Gleichzeitig sind aufgrund der Möglichkeit, über die gesamten Ofenwagenlängen die Energie gleichmäßig zu verteilen die Ofenwagen über ihre nahezu gesamte Länge mit Formlingen zu versehen. Es ergibt sich somit ein quasi kontinuierlicher Stapelstrang über die Ofenstrecke. Aufgrund der Stapelung über die gesamte Ofenwagenlänge und bis knapp unter die Decke der Brennzone können trotz der Längsgassen mehr Formlinge gebrannt werden.

Möglich ist die Einbringung der Brenn- oder Heizelemente von unten in die Längsgassen. Vorzugsweise ragen bei einem erfindungsgemäßen Ofen die Brenn- oder Heizelemente von einer Ofendecke in die Brennzone hinein. Nach unten hin kann dann durch dicht aneinander befindliche Ofenwagenoberseiten benachbarter Züge eine Abschottung der beweglichen Teile des Ofenwagens von der eingebrachten Hitze erfolgen.

Vorzugsweise sind die Brenn- oder Heizelemente lanzenartig, d.h. schmal und längsgestreckt ausgebildet. Hierdurch können die Längsgassen schmal gehalten werden. Insbesondere sind die Brenn- oder Heizelemente zumindest endseitig mit wenigstens einer Austrittsöffnung versehen, durch die der Brennstoff, beispielsweise ein Gas, ggf. auch ein Öl, in die Brennzone gelangt. Das Brenn- oder Heizelement kann auch eine an einem seitliche abstehenden Steg die Austrittsöffnung aufweisen und/oder eine Mehrzahl von Austrittsöffnungen in unterschiedlicher Höhe aufweisen.

Vorzugsweise weist ein Ofen in einer erfindungsgemäßen Weiterbildung wenigstens ein Mittel zur höhenvariablen Befestigung der Brenn- oder Heizelemente auf. Die Anordnung der Heizelemente kann dann in Abhängigkeit der zu brennenden Formlinge variiert werden.

Die Ofenstrecke weist vorzugsweise zwischen den bezüglich der Brennzone gegenüberliegenden Seiten der Ofenstrecke zwei Strahlungszonen und insbesondere seitlich der Strahlungszonen zu den jeweiligen Enden der Ofenstrecke hin zwei Umwälzzonen auf. In der Strahlungszone erfolgt gezielt keine durch Lüfter oder dgl. gestützte Querumwälzung der Luft, da der über Strahlung abgegebene Anteil der Wärme von den gebrannten Formlingen deutlich größer ist als ein über Umwälzung zwischen den zu kühlenden und zu erwärmenden Formlingen realisierbarer Wärmetransport. Gleichzeitig ist in den Umwälzzonen der Anteil der querumgewälzten Luft aufgrund der verwendeten Umwälzmittel, zumeist eines Lüfters, deutlich, d.h. mindestens eine Größenordnung, größer als der Anteil der in Richtung der Ofenstrecke längstransportierten Luft, wobei unter Luft ein entsprechendes Rauchgasgemisch gemeint ist, welches zu geringen Anteilen mit Umgebungsluft vermischt sein kann.

Vorzugsweise weist der erfindungsgemäße Ofen Ofenwagen einer Breite auf, die nur geringfügig über die Länge der zu brennenden Formlinge hinausgeht. Gerade bei der Verwendung einer großen Zahl von Ofenzügen, vorzugsweise zumindest 6, insbesondere jedoch 12 Ofenzügen mit je 6 in jede Richtung A, B fahrenden Zügen, über deren Formlinge 11 dazwischen befindliche Gassen definiert werden, ergibt sich durch die aneinander entlang fahrenden Züge ein optimale Ausnutzung der eingesetzten Wärme.

Die Ofenstrecke eines erfindungsgemäßen Ofens weist einen Haupttunnel auf, in dem die Ofenwagen parallel verlaufender Ofenzüge direkt nebeneinander her und ohne dazwischen befindliche Wandung bewegt werden können. Ausgehend von einem seitlichen Ende der Ofenstrecke können zunächst eine Umwälzzone, dann eine Strahlungszone und eine zentrale Brennzone vorhanden sein, auf der anderen Seite der Brennzone folgen anschließend wieder eine Strahlungs- und dann eine Umwälzzone. Nach dieser endet die Ofenstrecke. Typischerweise fahren die Ofenzüge auf Schienen durch ein Wasserbad. Durch die Mehrzahl von nebeneinander durch eine gemeinsame Brennzone und einen gemeinsamen Tunnel einander entgegengesetzt fahrenden Formlinge heizen die soeben aus der Brennzone gelangten Formlinge in der Strahlungszone die noch nicht in der Brennzone befindlichen Formlinge auf. Die bereits gebrannten kühlen sich ab. Durch die Querumwäl-zung der im Tunnel befindlichen Luft in der Umwälzzone und die dort im Querschnitt betrachtet angestrebte Temperaturgleichverteilung kühlen sich die bereits gebrann-ten weiter ab, während die ungebrannten sich langsam erwärmen. Durch den Ver-zicht auf eine Richtungsumkehr in der Brennzone ist die Vorrichtung technisch ein-facher zu realisieren. Insgesamt kann sich in Kombination der erfindungsgemäßen Ausbildung der Brenn- und Heizelemente in den Längsgassen der Brennzone, der Ausbildung einer Vielzahl von gegeneinander verfahrenden Ofenzügen und die vorbeschriebene Querumwälzung eine Energieeinsparung von bis zu 70 % gegenüber herkömmlichen Öfen aus dem Stand der Technik.

Es kann auf Kühlluftzuführung verzichtet werden, da die Kühlung der bereits gebrannten Formlinge in der Strahlungszone und in der Umwälzzone durch die ungebrannten Formlinge erfolgt. Es erfolgt keine gezielte Kühlung der gebrannten Formlinge durch zusätzliche Luftzufuhr. Entsprechend sind etwaige Absaugvorrichtung zum Absaugen von Rauchgas geringer dimensionierbar.

In der Umwälzzone ist wenigstens ein Lüfter zur Querumwälzung von vorhandenem Gas vorgesehen. Ein solcher Lüfter kann entweder in einer seitlichen Wandung des Haupttunnels oder auch in der Decke angeordnet sein. Insbesondere weist zumindest eine der Umwälzzonen jedoch wenigstens eine separate Wandung auf, über die wenigstens ein hauptsächlich quer zum Haupttunnel verlaufender Umwälzkanal von einem Haupttunnel der Ofenstrecke getrennt ist. In dieser Wandung kann dann der Lüfter mit einer Einströmseite zum Haupttunnel hin angeordnet sein. Eine oberhalb der Formlinge befindliche Wandung bzw. Decke und eine Anordnung des Lüfters oberhalb der Formlinge in dieser Decke unterstützt die Querumwälzung von ohnehin nach oben steigende Luft, die dann ggf. unter leichter Abkühlung an einer Außenwand des Ofens entlang des Umwälzkanals zu den Seiten hin transportiert und dort wiederum in den Haupttunnel oder durch einen weitere seitliche Kanalabschnitte unmittelbar seitlich des Haupttunnels in denselben eingeleitet werden kann.

Vorzugsweise sind in Ofenstreckenlängsrichtung eine Mehrzahl von Umwälzkanälen, die baulich voneinander getrennt sind, angeordnet. Insofern sind oberhalb des Haupttunnel unter Verwendung einer Zwischendecke oder außen liegender Kanäle z.B. in Form von Rohren eine Mehrzahl von Querkanälen ausgebildet, denen vor-zugweise je zumindest ein Lüfter zugeordnet sind. Insbesondere die Verwendung einer Zwischendecke ermöglicht ein außen auf einfache Weise gut isolierbares System. Durch separate Ansteuerung der Lüfter kann Temperaturverteilung in der Ofenstrecke gesteuert und mithin eine Brennkurve des Ofens variierbar ausgebildet werden.

Vorteilhafterweise ist bei einem Ofen mit einer Mehrzahl von Lüftern in den jeweiligen Umwälzzonen die Anordnung der Lüfter dergestalt, dass diese entlang der Ofenstrecke versetzt zueinander sind. D.h., sie weisen unterschiedliche Abstände zu den Längsseiten der Ofenstrecke auf. Hierdurch wird eine verbesserte Gleichverteilung der Temperatur aufgrund von einer sämtliche Formlinge erreichenden Strömung erreicht.

Unter Ofenwagen ist im Übrigen jegliche Art von Formlingstransportmittel zu verstehen. Beispielsweise kann es sich um einen Schlitten oder Formlingsträger handeln.

Vorteilhafterweise erfolgt die Erhitzung der (noch nicht gebrannten) Formlinge unter Verzicht von entlang der Ofenstrecke durch die Brennzone hindurch geführter (erhitzter) Kühlluft. Dies führt zu einer großen Energieeinsparung, da Wärmeverluste durch abgeführte Kühlluft vermieden werden. Unter Kühlluft wird hierbei Luft verstanden, die bei bekannten Ofen eingeblasen wird, um bereits gebrannte Formlinge zu kühlen, deren Wärme aufzunehmen und diese Wärme nach der Brennzone an die noch nicht gebrannten Formlinge abzugeben. Kühlluft umfaßt nicht Sekundärluft, die zwecks Anreicherung des Sauerstoffgehalts im Rauchgas/Luft-Gemisch z.B. zur Herstellung einer bestimmten Ziegelfarbe zugeführt wird. Die Kühlung der bereits gebrannten Formlinge erfolgt ebenfalls unter Verzicht auf Kühlluft sondern durch Wärmeabgabe an die trockenen Formlinge.

Durch die Brennzone hindurch erfolgt somit keine gezielte Kühlluftführung und die vom Luft/Rauchgas-Gemisch in der Strahlungszone transportierbare Wärme ist vernachlässigbar. Gegenüber mit Kühlluft arbeitenden Tunnelöfen liegt die Energieeinsparung bei bis zu 40%. Durch den Verzicht auf Kühlluftsysteme ist der Ofen darüber hinaus günstiger herstellbar und weniger wartungsanfällig.

Die Rate der querumgewälzten Luft ist bevorzugt deutlich größer als die der längs der Ofenstrecke bewegten Luft, wobei unter im Ofen befindlicher Luft vor- und nachstehend ein Rauchgas oder ein Rauchgas-/Luft-Gemisch bzw. Gasgemisch zu verstehen ist. Letzteres setzt sich zusammen aus den gegebenenfalls im Verbrennungsprozeß entstehenden Rauchgasen, etwaiger zur Anreicherung von Sauerstoff auf z.B. 10% bis 15% zugeführter Sekundärluft, sowie durch etwaige seitliche Schleusen gegebenenfalls in die Ofenstrecke gelangter Luft. Das Verhältnis von quer umgewälzten Gasmassenstrom zum längs der Ofenstrecke gerichteten Gasmassenstrom ist vorzugsweise >10, noch bevorzugter >25 sowie besonders bevorzugt >50. Durch die großen Unterschiede im Gasmassenstrom längs und quer zur Ofenstrecke wird deutlich, dass nur ein geringer Gasmassenstrom in Längsrichtung der Ofenstrecke vorhanden ist. Entsprechend wird nur wenig Wärme bei der Absaugung des Rauchgas-/Luftgemisches verloren. In den Umwälzzonen wird durch die starke Umwälzung der Luft eine Gleichverteilung der Temperatur über den gesamten Besatz aller parallel zueinander befindlichen Ofenzüge mit den zu kühlenden bzw. zu erhitzenden Formlingen angestrebt.

Zur Querumwälzung wird das im Ofen befindliche Gasgemisch von wenigstens einem insbesondere oberhalb und/oder seitlich der Züge befindlichen Lüfter angesaugt und vorzugsweise oberhalb einer Wandung oder Zwischendecke des Ofens in Querrichtung geleitet, um in Ofenstreckenlängsrichtung betrachtet jeweils seitlich der äußeren Ofenzüge nach unten geleitet zu werden und durch die Formlinge hindurch bzw. durch kleine Spalten zwischen den Formlingen wiederum einwärts hin zur Mitte der Ofenstrecke zu strömen. Durch die Verwendung eines oberhalb der Formlinge angeordneten Lüfters wird das natürliche Konvektionsbestreben des Gasgemisches unterstützt, um eine möglichst widerstandsfreie Strömung zu erhalten und den hierfür benötigten Arbeitsaufwand zu minimieren. Gleichzeitig erfolgt von der Seite eine gleichmäßige Anströmung der Luft an die Formlinge. Vorzugsweise ist der Lüfter als Radiallüfter ausgebildet und saugt Luft durch eine Ausnehmung einer Zwischendecke an, oberhalb derer die Luft dann zur Seite geleitet wird. Insbesondere wird die Luft strömungsoptimiert geleitet und gelangt gleichmäßig verteilt an die Seite der seitlichen Formlingsstapel. Hierfür können vorzugsweise abgerundete Begrenzungen des Strömungskanals und der weitgehende Verzicht auf Abrißkanten oder dergl. Turbulenz verursachende Konturen Sorge tragen.

Vorteilhafterweise erfolgt eine Variation der Brennkurve des Ofens über die Variation der Rate der querumgewälzten Luft in der Umwälzzone. Insbesondere kann die Brennkurve, d.h. die Temperatur der Formlinge entlang der Ofenstrecke, bei einer Mehrzahl von nebeneinander in der Umwälzzone angeordneten Umwälzkanälen variiert werden. Zusätzlich zur Variation der Brennkurve über die Schubzeit und die Garbrandtemperatur kann sich die Temperatur der (bereits gebrannten bzw. ungebrannten) Formlinge in der Umwälzzone als Funktion der (Quer-) Umwälzrate bzw. der Umwälzraten bei mehreren (Quer-)Umwälzkanälen ergeben. Die Umwälzrate wird bevorzugt durch die Steuerung der Lüfter variiert.

Zur Unterstützung der Umformung von organischem Material in Formlingen kann insbesondere in einem Temperaturbereich < 700° entlang der Ofenstrecke Sauerstoff zugeführt werden. Vorzugsweise wird hierfür Umgebungsluft verwendet. Der Anteil der zugeführten Luft liegt in der Größenordnung des längs der Ofenstrecke gerichteten Massenstroms. Ziel ist die Anhebung des Sauerstoffgehalts beispielsweise im Rauchgas von z.B. 3% auf 10% bis 15%. Eine Zuführung in der Umwälzzone kann alternativ oder ergänzend zu einer Zuführung von Sauerstoff im Brennraum erfolgen.

Weitere Vorteile und Einzelheiten der Erfindung sind der nachfolgenden Figurenbeschreibung zu entnehmen.

In den Figuren zeigt auf schematische Weise
- Fig. 1: eine schematische Draufsicht auf einen Teil eines erfindungsgemäßen Ofens,
- Fig. 2: einen Querschnitt durch einen weiteren erfindungsgemäßen Gegenstand,
- Fig. 3: eine Teilansicht eines Schnitts III - III durch den erfindungsgemäßen Gegenstand gemäß Fig. 2,
- Fig. 4: einen Querschnitt durch die Brennzone,
- Fig. 5: einen teilweisen Längsschnitt durch die Brennzone,
- Fig. 6: eine Brennkurve, die über die Variation der Querumwälzungsrate in den Umwälzzonen variiert ist.

Gleich oder ähnlich wirkende Teile sind - sofern dienlich - mit identischen Bezugsziffern versehen. Einzelne technische Merkmale der nachfolgend beschriebenen Ausführungsbeispiele können in Kombination mit dem Hauptanspruch sowie auch mit den Merkmalen der vorbeschriebenen Ausführungsbeispiele zu erfindungsgemäßen Weiterbildungen führen.

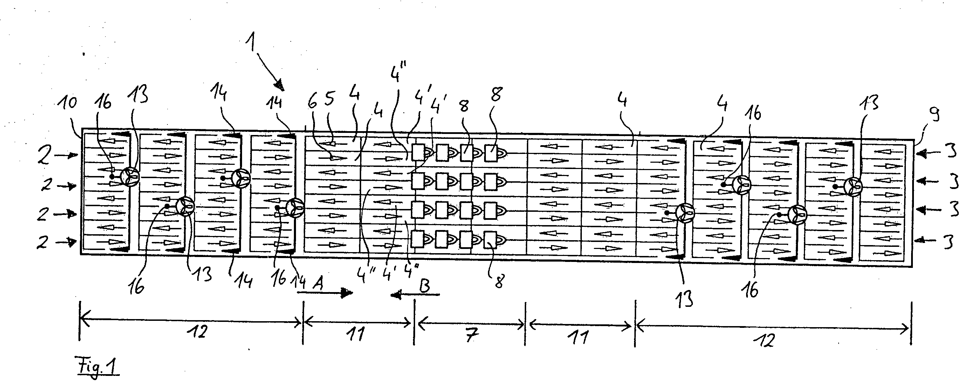

Fig. 1 zeigt eine schematische und teilweise perspektivische Draufsicht auf einen erfindungsgemäßen Gegenstand. Gezeigt ist eine allgemein mit 1 bezifferte Ofenstrecke, auf der insgesamt acht Ofenzüge angeordnet sind. In der Figurenebene fahren mit 2 bezifferte Ofenzüge in Richtung A, d.h. nach rechts, während mit 3 bezifferte Ofenzüge in Richtung B nach links fahren. Jeder Ofenzug 2,3 weist eine Mehrzahl von in Längsrichtung (A bzw. B) aneinander angeordneten Ofen- bzw. Herdwagen 4 auf, teilweise kenntlich gemacht durch Pfeile 5 bzw. 6. Die Ofenwagen 4 der Ofenzüge 2 werden auf der in der Figur linken Seite bestückt und auf der rechten Seite entnommen, die Wagen der mit 3 bezifferten Ofenzüge werden entsprechend auf der rechten Seite bestückt und auf der linken Seite entnommen.

Der Ofen weist eine mittlere Brennzone 7 auf, in der eine Vielzahl von Brenn- oder Heizelementen 8, in Bewegungsrichtung A oder B sowie in Längsrichtung des Ofens betrachtet in unterschiedlichen Höhen angeordnet sind. Beidseitig zu den seitlichen Enden 9 und 10 der Ofenstrecke hin schließen sich Strahlungszonen 11 an. Diese wiederum grenzen jeweils an eine Umwälzzone 12.

Während in der Brennzone 7 alle Formlinge erhitzt werden, dienen sowohl die Umwälzzonen wie auch die Strahlungszonen einerseits der Erwärmung der noch nicht gebrannten Formlinge sowie andererseits im selben Moment der Kühlung der bereits die Brennzone hinter sich gelassenen Formlinge. Ein Übergang von Formlingen in die Brennzone bzw. aus der Brennzone heraus erfolgt durch ein Verfahren der nebeneinander angeordneten Züge in entgegengesetzte Richtungen. Auf Ofenwagen 4' befindliche Formlinge, die während eines Schubs des Ofenzuges die Brennzone 7 verlassen haben, werden neben den auf dem Ofenwagen 4" befindlichen Formlingen positioniert und ein Wärmeübergang von den bereits gebrannten Formlingen auf die noch nicht gebrannten erfolgt.

Nachdem bereits gebrannte Formlinge in der Strahlungszone bis auf 700°C - 800 °C heruntergekühlt sind, treten sie nach mehrmaligem Verschieben der Züge in eine der Umwälzzonen 12 ein. In jeder der beiden Umwälzzonen 12 befinden sich deckenseitig Lüfter 13 mit oberhalb der Formlinge befindlichen Einströmöffnungen, die eine Querumwälzung der in dem Ofentunnel befindlichen Gase bewirken. Pfeile 14, die perspektivisch zu betrachten sind, zeigen an, dass von den Lüftern 13 transportierte Luft seitlich zu den Längsseiten der Ofenstrecke transportiert und dort weiter seitlich nach unten auf Höhe der Formlinge befördert wird. Die Anordnung der Lüfter ist leicht perspektivisch dargestellt, wobei ausgemalte kleine Kreise 16 der die Posi-tion eines Lüfters mit Bezug auf die Ebene der Formlinge andeuten. Eine Bestückung erfolgt auf beiden Seiten der Ofenstrecke und die Formlinge werden in beide Richtungen unter Verzicht auf eine Richtungsumkehr sowie eine Querversetzung durch die Brennzone hindurchbewegt und jeweils an dem bezüglich ihrer Bestückung entgegengesetzten Ende der Ofenstrecke dieser entnommen.

Die schematisch dargestellten Brennelemente 8 sind in den in den Fig. näher dargestellten Längsgassen zwischen den Zügen angeordnet, können darüber hinaus jedoch auch oberhalb der Formlinge angeordnet sein. Durch die Wärmeübertragung von den gebrannten auf die ungebrannten Formlinge bzw. Ziegel müssen die bereits gebrannten Ziegel nicht extra gekühlt werden. Es erfolgt keine gesonderte Kühlluftzuführung. Ungeachtet dessen kann es sinnvoll sein, durch geringe Zuführung von Sauerstoff im vorbeschriebenen Masse den Sauerstoffgehalt des Rauchgas-/Luftgemisches auf 10% bis 15% anzuheben.

Während bei konventionellen Tunnelöfen das Verhältnis von quer umgewälzter Masse zu längs umgewälzter Masse pro Zeiteinheit ≤ 1 ist, ist bei den erfindungsgemäßen Öfen das Verhältnis der in einem Bereich der Umwälzzonen quer umgewälzten Luft/Rauchgas-Mischung zur längs der Ofenstrecke in Richtung A bzw. B transportierten Luft > 10, insbesondere > 50. Für die Querumwälzung wird hierbei beispielsweise die durch einen der Lüfter 13 angesaugte und quer zur Längserstreckung der Ofenstrecke transportierte Luft betrachtet.

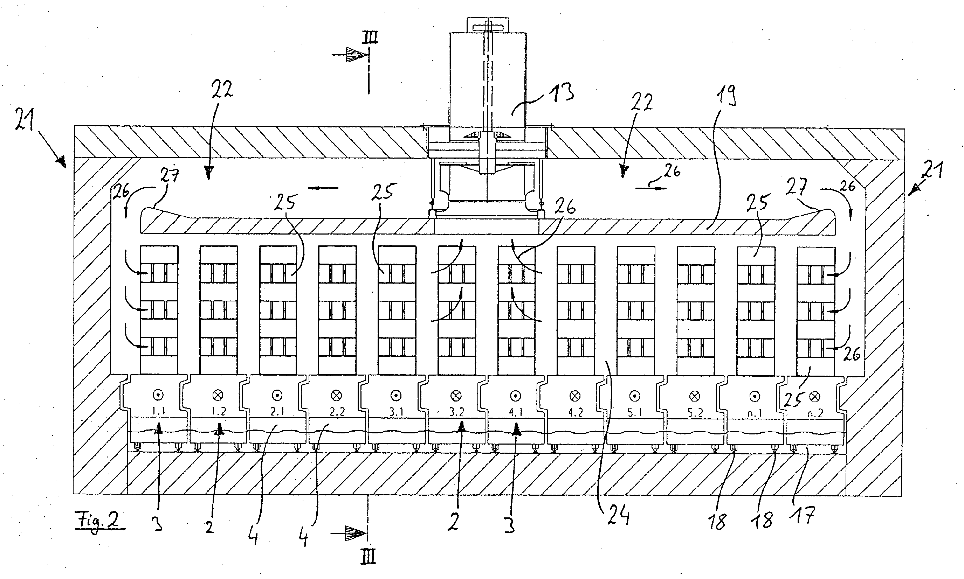

Fig. 2 zeigt einen Querschnitt in einer Umwälzzone eines weiteren erfindungsgemäßen Gegenstands. Im dargestellten Ausführungsbeispiel sind zwölf Ofenzüge 2, 3 nebeneinander angeordnet, wobei Ziffern 1.1, 1.2, 2,1, 2.2 bis n.2 die Nummerierung von Paaren von Schienen 18 darstellen. Alle Ofenzüge 2, 3 laufen in einem an sich bekannten Wasserbad 17 auf ebenfalls bekannten Schienen 18. Die Ofenwagen 4 weisen zueinander korrespondierende Seitenbereiche auf, um den Wärmeeintrag in das Wasserbad zu verringern.

In der Umwälzzone ist eine als Decke ausgebildete Wandung 19 vorhanden, durch die zu den Seiten 21 hin verlaufende Umwälzkanäle 22 ausgebildet werden. Durch einen als Radiallüfter ausgebildeten Lüfter 13 wird das im Haupttunnel 24 befindliche Rauchgas-/Luftgemisch in Richtung der Pfeile 26 transportiert. Durch die ansteigende und gerundete Formgebung der Zwischendecke an den Kanten 27 ist die Luftführung im Umwälzkanal verbessert, Abrißkanten, die zur Bildung von Luftwirbeln führen, werden vermieden. Durch den in etwa gitterförmigen Besatzaufbau der am äußersten linken bzw. rechten Rand des Haupttunnels 24 angeordneten Formlinge 25 wird eine Art Lüftungsgitter ausgebildet, so dass die umgewälzte Luft vergleichmäßigt durch die Formlinge hindurchströmen kann. In den Längsgassen zwischen den Formlingen einzelner entgegengesetzt zueinander fahrender Wagen/Züge können in der Brennzone Brennelemente bis zum untersten Formling angeordnet werden.

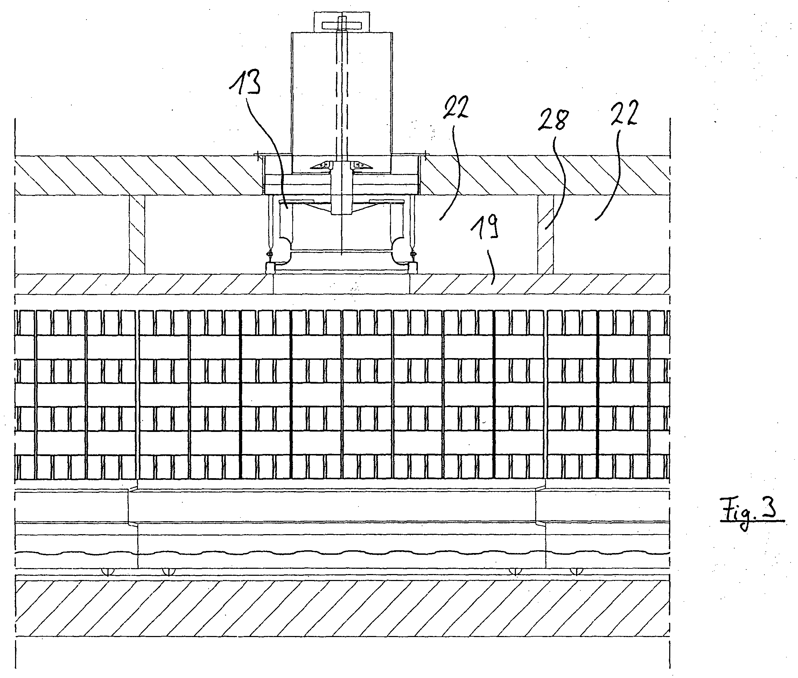

Fig. 3 zeigt den Querschnitt III - III nach Fig. 2. Dies in einer links und rechts geschnitten Ansicht. Ersichtlich sind benachbarte Umwälzkanäle 22 durch Seitenwände 28 voneinander getrennt. Im vorliegenden Ausführungsbeispiel ist jedem Umwälzkanal 22, der in Längsrichtung betrachtet eine Ofenwagenlänge lang ist, ein Lüfter zugeordnet.

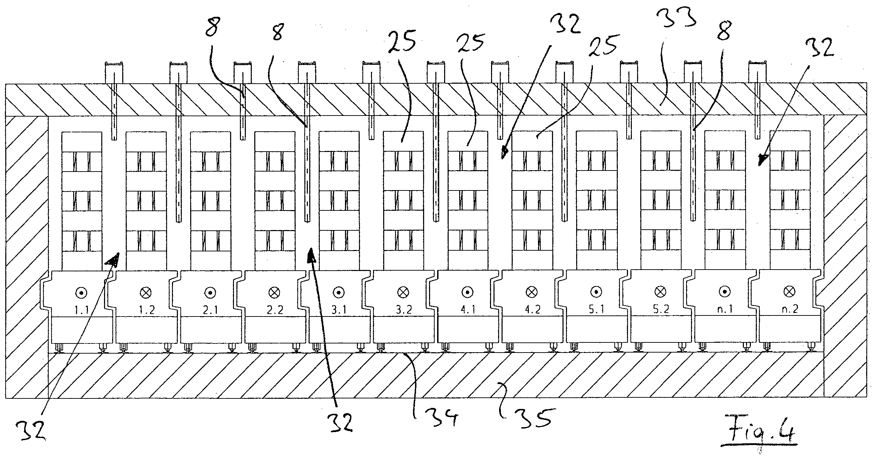

Die in der Fig. 4 abgebildeten 12 Ofenzüge führen zur Ausbildung von 11 Längsgassen 32, die beidseits, in der Figurenebenen links und rechts, durch Stapel von Formlingen 25 begrenzt sind. Lanzenartige Brenn- oder Heizelemente 8 ragen von einer Ofendecke 33 der Brennzone unterschiedlich hoch in jede der Längsgassen 32 hinein. Endseitige Austrittsöffnungen (nicht dargestellt) der Heizelemente sind unterschiedlich hoch über beispielsweise einer durch eine Oberseite 34 eines Bodens 35 ausgebildete horizontale Ebene angeordnet. Die Verteilung der eingebrachten Wärmeenergie erfolgt gezielter als im Stand der Technik.

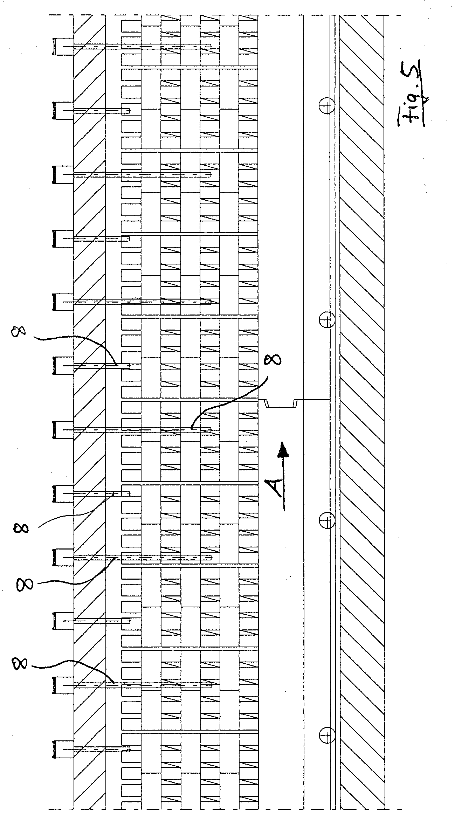

Auch in Längsrichtung ergibt sich in Fig. 5 durch die Vielzahl der Brenn- oder Heizelemente 8 eine gezieltere Verteilung der Energie. Die in der Figur gezeigten Heizelemente befinden sich alle in derselben Längsgasse 32. Die Längsgasse 32 wird begrenzt durch einen in Längs- beziehungsweise Bewegungsrichtung A betrachtet quasi kontinuierlichen Strang von gestapelten Formlingen, die den zur Verfügung stehenden Raum auf den Ofenwagen und bis unter die Decke der Brennzone aufgrund der in den Gassen angeordneten Heizelemente 8 optimal ausnutzen.

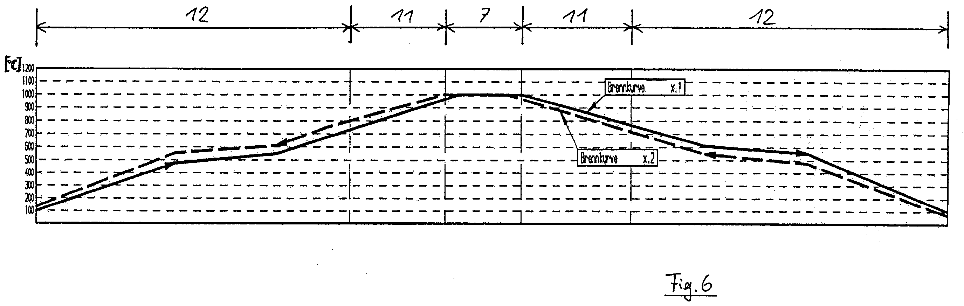

Fig. 6 zeigt den Verlauf zweier Brennkurven x.1 und x.2 als Funktion der Temperatur (in °C) entlang der Ofenstrecke. Gezeigt sind eine durchgezogene Linie für ein erstes Gleis, während die Brennkurve für ein benachbartes zweites Gleis gestrichelt dargestellt ist. In die jeweiligen Kurven eingezeichnete Pfeile zeigen die Bewegungsrichtung der Formlinge entlang des Gleises an. Die gestrichelt dargestellte Linie zeigt Formlinge an, die in der Figurenebene von rechts nach links bewegt werden.

In der Brennzone 7 zeigen beide Kurven identische Temperaturen für die Formlinge an, in den Strahlungszonen 11 fallen die Temperaturen gleichmäßig ab. Beidseitig der Strahlungszonen 11 weisen die Kurven ein durch die entsprechend eingestellte Lüfter zur Querumwälzung der Luft in den Umwälzzonen 12 ein Plateau auf, durch welches beispielsweise Umsetzungsprozesse von organischem Material in den Formlingen verbessert gesteuert werden können. Eine Entnahme der Formlinge auf beiden Seiten der Ofenstrecke erfolgt bei Temperaturen meist unterhalb von 120 °C.

## Patentansprüche

1. Ofen zum Brennen von keramischen Formlingen (25), insbesondere von Ziegeln, mit einer Mehrzahl von in parallel zueinander und entlang einer längsverlaufenden Ofenstrecke (1) bewegbaren Zügen, die jeweils mehrere Ofenwagen (4) umfassen, auf denen die Formlinge (25) anzuordnen sind, wobei die Ofenstrecke (1) eine Brennzone (7) zur Erhitzung der Formlinge (25) aufweist und wobei nebeneinander angeordnete Züge (2,3) in entgegengesetzten Richtungen (A, B) bewegbar sind und der Ofen auf einer ersten Seite (10) der Ofenstrecke (1) zur Bestückung des Ofens mit in einer ersten Richtung (A) zu bewegenden Formlingen (25) ausgebildet ist, und der Ofen auf einer der ersten Seite (10) und bezüglich der Brennzone (7) gegenüberliegenden zweiten Seite (9) der Ofenstrecke zur Bestückung mit den in die entgegengesetzte, zweite Richtung (B) zu bewegenden Formlingen (25) ausgebildet ist, die Ofenwagen (4) jeweils unter Verzicht auf eine Richtungsumkehr durch die Brennzone (7) hindurch bewegbar sind und die im Betrieb auf den Ofenwagen anzuordnenden Formlinge (25) nebeneinander angeordneter Züge eine zwischen den Formlingen (25) befindliche Längsgasse (32) definieren, **dadurch gekennzeichnet, dass** in der Brennzone (7) eine Mehrzahl von Brenn- oder Heizelementen (8) dergestalt in unterschiedlicher Höhe in wenigstens einer Längsgasse (32) angeordnet ist, dass eine Energiezufuhr in die Brennzone (7) unterschiedlich hoch erfolgt, wobei die Brenn- oder Heizelemente (8) des mehr als zwei nebeneinander befindliche Züge aufweisenden Ofen in benachbarten Längsgassen (32) in der Höhe versetzt zueinander angeordnet sind.

2. Ofen nach Anspruch 1, **dadurch gekennzeichnet, dass** bei einer Anzahl n > 2 Zügen und einer Anzahl (n-1) Längsgassen (32) zumindest in jeder zweiten Längsgasse (32), bevorzugt in jeder Längsgasse (32), wenigstens ein Brenn- oder Heizelement (8) angeordnet ist.

3. Ofen nach einem der vorherigen Ansprüche, **dadurch gekennzeichnet, dass** die Brenn- oder Heizelemente (8) von einer Ofendecke (33) in die Brennzone (7) hineinragen.

4. Ofen nach einem der vorherigen Ansprüche, **dadurch gekennzeichnet, dass** die Brenn- oder Heizelemente (8) lanzenartig ausgebildet sind und insbesondere zumindest endseitig wenigstens eine Austrittsöffnung aufweisen.

5. Ofen nach einem der vorherigen Ansprüche, **gekennzeichnet durch** wenigstens ein Mittel zur höhenvariablen Befestigung der Brenn- oder Heizelemente (8).

6. Ofen nach einem der vorherigen Ansprüche, **dadurch gekennzeichnet, dass** zwischen den bezüglich der Brennzone (7) gegenüberliegenden Seiten (10,9) der Ofenstrecke (1) zwei Strahlungszonen (11) angeordnet sind.

7. Ofen nach Anspruch 6, **dadurch gekennzeichnet, dass** zwischen den bezüglich der Brennzone gegenüberliegenden Seiten (10,9) der Ofenstrecke (1) zwei Umwälzzonen (12) angeordnet sind, die sich an die Strahlungszonen (11) anschließen.

8. Ofen nach Anspruch 7, **dadurch gekennzeichnet, dass** in den Umwälzzonen (12) wenigstens ein Lüfter (13) zur Querumwälzung von vorhandenem Gas vorgesehen ist.

9. Ofen nach Anspruch 7 oder 8, **dadurch gekennzeichnet, dass** zumindest eine der Umwälzzonen wenigstens eine separate Wandung (19) aufweist, über die wenigstens ein Umwälzkanal (22) von einem Haupttunnel (24) der Ofenstrecke (1) getrennt ist.

10. Ofen nach Anspruch 9, **gekennzeichnet durch** eine Mehrzahl von quer zur Ofenstreckenlängsrichtung verlaufenden Umwälzkanälen (22), die baulich voneinander getrennt sind.

11. Ofen nach einem der Ansprüche 7 bis 10 mit einer Mehrzahl von Lüftern, **dadurch gekennzeichnet, dass** die Lüfter (13) entlang der Ofenstrecke (1) versetzt zueinander angeordnet sind.

## Claims

1. Kiln for firing ceramic blanks (25), in particular bricks, the kiln comprising a plurality of trains which can be moved in parallel with one another and along a kiln path (1) extending longitudinally and each comprise a plurality of kiln cars (4) on which the blanks (25) are intended to be arranged, the kiln path (1) having a firing region (7) for heating the blanks (25) and it being possible to move trains (2, 3) arranged next to one another in opposite directions (A, B) and the kiln being designed, on a first side (10) of the kiln path (1), to be loaded with blanks (25) to be moved in a first direction (A), and the kiln being designed, on a second side (9) of the kiln path that is opposite the first side (10) with respect to the firing region (7), to be loaded with the blanks (25) to be moved in the opposite second direction (B), it being possible to move the kiln cars (4) through the firing region (7) in each case without reversing the direction and the blanks (25) of trains arranged next to one another, which blanks are to be arranged on the kiln cars during operation, defining a longitudinal channel (32) located between the blanks (25), **characterised in that**, in the firing region (7), a plurality of firing or heating elements (8) are arranged at different heights in at least one longitudinal channel (32) such that energy is supplied into the firing region (7) at different heights, the firing or heating elements (8) of the kiln having more than two trains located next to one another being arranged in adjacent longitudinal channels (32) so as to be offset from one another in height.

2. Kiln according to claim 1, **characterised in that**, when the number of trains is n > 2 and the number of longitudinal channels (32) is (n-1), at least one firing or heating element (8) is arranged at least in each second longitudinal channel (32), preferably in each longitudinal channel (32).

3. Kiln according to either of the preceding claims, **characterised in that** the firing or heating elements (8) project from a kiln roof (33) into the firing region (7).

4. Kiln according to any of the preceding claims, **characterised in that** the firing or heating elements (8) are lance-like and have in particular at least one outlet opening at least on the end.

5. Kiln according to any of the preceding claims, **characterised by** at least one means for height-adjustably fastening the firing or heating elements (8).

6. Kiln according to any of the preceding claims, **characterised in that** two radiation regions (11) are arranged between the sides (10, 9) of the kiln path (1) that are opposite one another with respect to the firing region (7).

7. Kiln according to claim 6, **characterised in that** two circulation regions (12) are arranged between the sides (10, 9) of the kiln path (1) that are opposite one another with respect to the firing region, which circulation regions connect to the radiation regions (11).

8. Kiln according to claim 7, **characterised in that** at least one ventilator (13) is provided in the circulation regions (12) for transversely circulating gas that is present.

9. Kiln according to either claim 7 or claim 8, **characterised in that** at least one of the circulation regions has at least one separate wall (19) by means of which at least one circulation duct (22) is separated from a main tunnel (24) of the kiln path (1).

10. Kiln according to claim 9, **characterised by** a plurality of circulation ducts (22) which extend transversely with respect to the longitudinal direction of the kiln path and are structurally separated from one another.

11. Kiln according to any of claims 7 to 10 comprising a plurality of ventilators, **characterised in that** the ventilators (13) are arranged along the kiln path (1) so as to be offset from one another.

## Revendications

1. Four destiné à la cuisson de briques creux (25) de céramique, en particulier de tuiles, comprenant une pluralité de trains qui peuvent être déplacés parallèlement les uns aux autres et le long d'une section de four longitudinale (1) et qui comprennent chacun une pluralité de chariots de four (4) sur lesquels les briques crues (25) doivent être disposées, la section de four (1) comportant une zone de cuisson (7) destinée à chauffer les briques crues (25) et des trains (2, 3) disposés les uns à côté des autres étant mobiles dans des directions opposées (A, B) et le four étant conçu sur un premier côté (10) de la section de four (1) de manière à garnir le four de briques crues (25) à déplacer dans une première direction (A) et le four étant conçu sur l'un parmi le premier côté (10) et le deuxième côté (9), opposé à la zone de cuisson (7), de la section de four pour être garni des briques crues (25) à déplacer dans la deuxième direction opposée (B), les chariots de four (4) étant chacun mobiles à travers la zone de cuisson (7) sans pouvoir inverser la direction et les briques crues (25), devant être disposées en fonctionnement sur les wagons de four, de trains disposés les uns à côté des autres définissant une voie longitudinale (32) située entre les briques crues (25),
**caractérisé en ce que**, dans la zone de cuisson (7), une pluralité d'éléments de cuisson ou de chauffage (8) sont disposés à différentes hauteurs dans au moins une voie longitudinale (32) de sorte que l'apport d'énergie dans la zone de cuisson (7) varie en hauteur, les éléments de cuisson ou de chauffage (8) du four, qui comporte plus de deux trains situés les uns à côté des autres, étant disposés dans des voies longitudinales adjacentes (32) en étant décalés les uns des autres en hauteur.

2. Four selon la revendication 1, **caractérisé en ce que**, pour un nombre n > 2 de trains et un nombre (n-1) de voies longitudinales (32), au moins un élément de cuisson ou de chauffage (8) est disposé au moins dans chaque deuxième voie longitudinale (32), de préférence dans chaque voie longitudinale (32).

3. Four selon l'une des revendications précédentes, **caractérisé en ce que** les éléments de cuisson ou de chauffage (8) font saillie dans la zone de cuisson (7) depuis un plafond de four (33).

4. Four selon l'une des revendications précédentes, **caractérisé en ce que** les éléments de cuisson ou de chauffage (8) sont conçus sous forme de lancettes et comportent, notamment au moins d'un côté, au moins un orifice de sortie.

5. Four selon l'une des revendications précédentes, **caractérisé par** au moins un moyen de fixation à hauteur variable des éléments de cuisson ou de chauffage (8).

6. Four selon l'une des revendications précédentes, **caractérisé en ce que** deux zones de rayonnement (11) sont disposées entre les côtés opposés (10, 9), par rapport à la zone de combustion (7), de la section de four (1).

7. Four selon la revendication 6, **caractérisé en ce que** deux zones de recirculation (12), se raccordant aux zones de rayonnement (11), sont disposées entre les côtés opposés (10, 9), par rapport à la zone de combustion (7), de la section de four (1).

8. Four selon la revendication 7, **caractérisé en ce qu'**au moins un ventilateur (13) est prévu dans les zones de recirculation (12) pour la recirculation transversale du gaz présent.

9. Four selon la revendication 7 ou 8, **caractérisé en ce qu'**au moins une des zones de recirculation comporte au moins une paroi séparée (19) qui sépare l'au moins un conduit de recirculation (22) d'un tunnel principal (24) de la section de four (1).

10. Four selon la revendication 9, **caractérisé par** une pluralité de conduits de recirculation (22) qui s'étendent transversalement à la direction longitudinale de la section de four et qui sont structurellement séparés les uns des autres.

11. Four selon l'une des revendications 7 à 10 pourvu d'une pluralité de ventilateurs, **caractérisé en ce que** les ventilateurs (13) sont disposés situés le long de la section de four (1) en étant décalés les uns des autres.
